# EUROPÄISCHE PATENTANMELDUNG

(11) **EP 4 790 277 A1**
(43) Veröffentlichungstag der Anmeldung: **12.08.2026**
(21) Anmeldenummer: 25212516.6
(22) Anmeldetag: 30.10.2025
(51) Int. Cl.: F16H 21/44, F16H 35/14, F42B 10/14

(54) **ENTRIEGELUNGSFREIGABEEINHEIT, VERFAHREN ZUR KONTROLLIERTEN FREIGABE EINES MECHANISCHEN VERRIEGELUNGSELEMENTES UND FLUGKÖRPERSTELLSYSTEM**

(30) Priorität: 10.02.2025 DE 102025000492
(71) Anmelder: MBDA Deutschland GmbH, 86529 Schrobenhausen (DE)
(72) Erfinder: KLAFFERT, Thomas, 86666 Burgheim (DE)
(74) Vertreter: Isarpatent

(57) **Zusammenfassung**

Die vorliegende Erfindung betrifft eine Entriegelungsfreigabeeinheit (1) zur kontrollierten Freigabe einer mechanischen Verriegelung, aufweisend: ein Aktorgehäuse (10); wenigstens ein sich durch das Aktorgehäuse (10) erstreckendes und in axialer Richtung im Aktorgehäuse (10) verschiebbar angeordnetes Entriegelungselement (2); wenigstens eine im Aktorgehäuse (10) angeordnete Auslöseeinheit (7); wenigstens eine sich im Aktorgehäuse (10) einerseits und an dem Entriegelungselement (2) andererseits abstützende Toleranzausgleichsfeder (4); wenigstens eine sich im Aktorgehäuse (10) einerseits und in der Auslöseeinheit (7) andererseits abstützende Aktorfeder (5) und eine im Aktorgehäuse (10) vorgesehene Anlagefläche (9), wobei die wenigstens eine Auslöseeinheit (7) einen Auslösehebel (30); jeweils mit dem Auslösehebel (30) in Wirkverbindung stehend, einen ersten und einen zweiten Übersetzungshebel (34, 35); wenigstens eine im Aktorgehäuse (10) festgelegte, einen ein Freigabeelement (22) aufweisenden Elementhalter (21) und eine Führungskulisse für den Auslösehebel (30), den ersten Übersetzungshebel (35) und den zweiten Übersetzungshebel (34) zur Verfügung stellende Strukturkomponente (23); und wenigstens ein mit dem wenigstens einen Verriegelungselement (2) verbundenes Anschlagelement (8) umfasst, sowie ein Verfahren zur kontrollierten Freigabe eines mechanischen Verriegelungselementes mittels einer Entriegelungsfreigabeeinheit (1) und ein Flugkörperstellsystem aufweisend eine Auslösemechanik mit wenigstens einer solchen Entriegelungsfreigabeeinheit (1).

## Beschreibung

### TECHNISCHES GEBIET DER ERFINDUNG

Die vorliegende Erfindung betrifft eine Entriegelungsfreigabeeinheit, ein Verfahren zur kontrollierten Freigabe eines mechanischen Verriegelungselementes und ein Flugkörperstellsystem mit einer eine Entriegelungsfreigabeeinheit aufweisenden Auslösemechanik.

### HINTERGRUND DER ERFINDUNG

Entriegelungssysteme werden vorwiegend in der Luftfahrttechnik eingesetzt, um beispielsweise in Flugkörperstellsystemen deren Antriebe für steuerbare Ruder bzw. Steuerelemente, schwenkbare Tragflächen oder auch die Antriebstränge von Schubvektorkontrollsystemen, sowohl vor deren Aktivierung (beispielsweise während Lagerung, Transport und während des Tragflugs), als auch während kritischer Flugphasen (Start, Abgangsphase) arretiert in ihrer Neutralposition zu halten, bevor deren geregelte Stellaktorik aktiviert ist und eingreifen kann. Das sehr breite Anwendungsspektrum aktiv gesteuerter oder geregelter Stellsysteme beinhaltet teilweise auch sicherheitskritische Einsatzfälle innerhalb von Szenarien, in denen Ausfälle, Fehlfunktionen oder zeitweise Überlastungen nicht hinnehmbar sind. Die Komplexität der Funktionsketten bekannter Stellantriebe bzw. Servosysteme, bestehend beispielsweise aus Aktoren, kinematischen Ketten, Sensoren, Elektroniken, Steueralgorithmen, Hilfs- und Versorgungssystemen sowie ihren Verbindungen innerhalb des Energieflusses, erfüllen oftmals erhöhte Sicherheits- und Zuverlässigkeitsanforderungen innerhalb kritischer Einsatzszenarien zur unzureichend.

### ZUSAMMENFASSUNG DER ERFINDUNG

Dementsprechend ist es eine Aufgabe der vorliegenden Erfindung, eine Entriegelungsaktorik derart weiterzubilden, dass einmalige, irreversible Auslösevorgänge zuverlässig realisiert werden können.

Die vorliegende Aufgabe wird gelöst durch eine Entriegelungsfreigabeeinheit mit den Merkmalen des Anspruchs 1, ein Verfahren zur kontrollierten Freigabe eines mechanischen Verriegelungselementes mit den Merkmalen des Anspruchs 10 sowie ein Flugkörperstellsystem mit den Merkmalen des Anspruchs 14.

Nach einem ersten Aspekt der vorliegenden Erfindung ist eine Entriegelungsfreigabeeinheit zur kontrollierten Freigabe einer mechanischen Verriegelung vorgesehen. Die erfindungsgemäße Entriegelungsfreigabeeinheit weist dabei ein Aktorgehäuse, wenigstens ein sich durch das Aktorgehäuse erstreckendes und in axialer Richtung im Aktorgehäuse verschiebbar angeordnetes Entriegelungselement, wenigstens eine im Aktorgehäuse angeordnete Auslöseeinheit, wenigstens eine sich im Aktorgehäuse einerseits und an dem Entriegelungselement andererseits abstützende Toleranzausgleichsfeder, wenigstens eine sich im Aktorgehäuse einerseits und in der Auslöseeinheit andererseits abstützende Aktorfeder, und eine im Aktorgehäuse vorgesehene Anlagefläche auf. Die wenigstens eine Auslöseeinheit umfasst dabei erfindungsgemäß einen Auslösehebel, jeweils mit dem Auslösehebel in Wirkverbindung stehend, einen ersten und einen zweiten Übersetzungshebel, wenigstens eine im Aktorgehäuse festgelegte, einen ein plastisch verformbares, reiß- oder brechbares Freigabeelement aufweisenden Elementhalter und eine Führungskulisse für den Auslösehebel, den ersten Übersetzungshebel und den zweiten Übersetzungshebel zur Verfügung stellende Strukturkomponente, und ein mit dem wenigstens einen Verriegelungselement verbundenes Anschlagelement. Vorteilhaft gewährleistet die Integration einer Auslöseeinheit mit einem plastisch verformbaren, reiß- oder brechbaren Freigabeelement eine präzise steuerbare Freigabe der Verriegelung. Durch die plastische Verformung, das Reißen oder Brechen des Freigabeelementes, herbeigeführt durch beispielsweise mechanische, chemische, oder thermische Beaufschlagung oder durch Bestromung des Freigabeelementes wird der Entriegelungsvorgang kontrolliert eingeleitet, wodurch eine definierte zeitliche Sequenz sichergestellt wird. Dies minimiert das Risiko ungewollter oder vorzeitiger Entriegelungen und maximiert die Funktionssicherheit. Die Verwendung einer Toleranzausgleichsfeder und einer Aktorfeder als Energiespeicher stellt sicher, dass die für die Entriegelung erforderliche Vorspannkraft über lange Zeiträume stabil bleibt, selbst unter extremen Umgebungsbedingungen wie variierenden Temperaturzyklen, Verschmutzung, Vereisung oder Vibrationen. Die mechanische Konstruktion reduziert zudem Abhängigkeiten von elektronischen Komponenten und ist dadurch weniger anfällig für Ausfälle durch elektromagnetische Störungen (EMV). Als weiterer Vorteil ist anzusehen, dass die erfindungsgemäße Kombination eines Auslösehebels mit einem ersten und zweiten Übersetzungshebel eine zweistufige Kinematik ermöglicht, die die Federkraft der Aktorfeder effizient auf das Entriegelungselement überträgt, wodurch eine hohe Übersetzungsgenauigkeit erreicht wird. Kräfte werden optimal verteilt und lokal überhöhte Belastungen an den Kontaktstellen vermieden. Als weiterer Vorteil ist anzusehen, dass durch die erfindungsgemäße Ausgestaltung der Entriegelungsfreigabeeinheit, insbesondere bedingt durch das irreversibel plastisch verformbare, reiß- oder brechbare Freigabeelement eine ungewollte Wiederverriegelung infolge Rückprellbewegungen eines Entriegelungselementes und dessen sicheres Verharren in vorgesehener Endstellung gewährleistet ist. Die formschlüssige Führung innerhalb des Aktorgehäuses und die strukturierte Führungskulisse der Hebel erweist sich als vorteilhaft, da die Einheit selbst unter widrigen Bedingungen stabil funktioniert. Als günstig wird auch angesehen, dass durch die im Aktorgehäuse integrierte Führungskulisse die Hebelkinematik automatisch an Toleranzabweichungen und thermisch bedingte Längenänderungen anpassbar ist und somit die Gefahr von Verklemmungen oder Reibungsverlusten an den Kontaktflächen verringert wird. Die ebenen, bzgl. der Kontaktelemente tangentialen Kontaktflächen der Hebel und die Hertzsche Pressung minimieren tribologische Effekte wie Verschleiß, Kriech- oder Setzeffekte und erlauben eine gleichmäßige Kraftübertragung. Als weiterer Vorteil ist anzusehen, dass die erfindungsgemäß mechanische Konstruktion weniger anfällig für Alterungseffekte wie Materialdegradation oder Spannungsverluste ist und dadurch die Funktionalität auch nach langer Lagerung und/oder unter extremen Bedingungen (z. B. großen Temperaturbereichen) gewährleistet wird. Zusammenfassend stellt die Erfindung vorteilhaft eine in eine Entriegelungsaktorik eingebundene Mechanik zur Verfügung, durch deren Eingriff anfangs über eine kritische Einsatzphase hinweg bis zu einer Mindestentfernung von einer Start- bzw. Trägerplattform jegliche Aktorbewegung auf unabhängige Weise derart blockiert werden kann, dass eine definierte Aktorstellung (in der Regel Neutralstellung) aufrechterhalten wird, wobei selbst Fehlfunktionen durch interne Schäden, evtl. Fehlkommandierungen und selbst äußere Überlastungsfälle des Stellsystems innerhalb dieser Flugphase keine negativen Auswirkungen haben. Direkt im Anschluss kann diese Verriegelungsmechanik durch eine ebenfalls unabhängige Aktorik auf Kommando einen definierten Entriegelungsvorgang zur unverzüglichen Freigabe der gesteuerten bzw. geregelten Stellsystemfunktion zulassen, dessen Sequenz ebenfalls alle Anforderungen an Zuverlässigkeit die Funktionssicherheit erfüllt. Vorteilhaft wird diese durch die erfindungsgemäße besonders einfache, robuste und im Interesse sehr kurzer Funktionsketten aus wenigen, vorteilhaft verschalteten Bauteilen bestehende Entriegelungsfreigabeeinheit erreicht. Die erfindungsgemäße Entriegelungsfreigabeeinheit ermöglicht somit vorteilhaft die zeitweise Arretierung einer definierten Aktorstellung durch deren zeitweise Festlegung in besonders sicherheitsrelevanten Situationen bzw. Bereichen, beispielsweise zur Verhinderung ungewollter Aktoreingriffe durch Fehlkommandierung, in Schadensfällen oder auch Überlastungsfällen der Aktorik. Gleichzeitig gewährleistet die Entriegelungsfreigabeeinheit gemäß der Erfindung die unverzügliche Freigabe aller gesteuerten bzw. geregelten Aktoreingriffe unter allen geforderten Randbedingungen, z. B. unter maximalen äußeren Lasten sowie auch unter harschen Umweltbedingungen und Lastvielfachen während Lagerung, Transport, Start und Flug.

Die Erfindung umfasst sowohl einzelne, alle vorgenannten Merkmale aufweisende Entriegelungsfreigabeeinheiten aber auch Ausgestaltungen mit einer einzigen oder wenigen zentralen Auslöseeinheit(en), die gleichzeitig auf eine Mehrzahl von Entriegelungselementen wirken. Auch ist eine Bereitstellung einer Hebelkinematik für mehrere miteinander gekoppelte Entriegelungselemente denkbar.

Im Zusammenhang mit der vorliegenden Erfindung ist unter den Begriffen "plastisch verformbar" oder "plastischen Verformung" die irreversible Formänderung eines Festkörpers, wenn dieser einer mechanischen Spannung ausgesetzt wird, die oberhalb seiner Elastizitätsgrenze liegt zu verstehen. Das heißt, nach Entfernen der Belastung bleibt die Verformung bestehen, da die atomaren Gitterstrukturen des Materials dauerhaft verschoben wurden. Im Gegensatz zur elastischen Verformung kehrt das Material dabei nicht in seine ursprüngliche Form zurück. Beispiel einer plastischen Verformung im Sinne der Erfindung ist das Biegen oder Verbiegen des Freigabeelements, wobei der Verbiegevorgang irreversibel ausgeführt wird.

Im Zusammenhang mit der vorliegenden Erfindung ist unter den Begriffen "Reißen", "Brechen", "reiß- oder brechbar" ein Materialversagen, bei dem das Material seine Integrität verliert und in zwei oder mehr Teile zerfällt zu verstehen. Vor dem Brechen oder Reißen kann eine plastische Verformung auftreten, insbesondere bei duktilen Materialien wie z.B. Metallen, die sich vor dem Versagen deutlich verformen, während spröde Materialien ohne nennenswerte plastische Verformung brechen oder reißen.

Nach einem weiteren Aspekt der vorliegenden Erfindung weist die Führungskulisse an einer inneren Umfangswand der Strukturkomponente Kontaktelemente zur Kontaktierung und Führung von an Hebelenden des Auslösehebels, des ersten Übersetzungshebels und des zweiten Übersetzungshebels vorgesehenen Kontaktflächen auf. Vorteilhaft wird durch die Führungskulisse eine hochgenaue Führung der Hebel ermöglicht, wobei die Bewegungen der Hebelenden in einer definierten Bahn geführt sind. Dies sichert eine optimale Kraftübertragung und verhindert Kollisionen oder Fehlbewegungen der Hebelmechanik. Ein weiterer Vorteil ist, dass die definierte Kontaktierung zwischen den Hebelenden und der Führungskulisse eine stabile Positionierung der Hebel im unausgelösten Zustand, auch unter Einwirkung äußerer Einflüsse wie Vibrationen,

Temperaturschwankungen oder mechanischen Schocks gewährleistet und so das Risiko von unbeabsichtigten Entriegelungen oder einer Fehlfunktion der Hebelkinematik verringert. Die Führungskulisse kompensiert vorteilhaft auch Fertigungs- und Montagetoleranzen der Hebel und der Strukturkomponente und gewährleistet, dass die Hebelmechanik auch bei geringfügigen Abweichungen in den Bauteilabmessungen funktionsfähig bleibt.

Nach einem weiteren Aspekt der vorliegenden Erfindung sind die Kontaktelemente als tangential vorspringende, insbesondere zylindrisch ausgeformte, Anlagezapfen ausgebildet. Vorteilhaft ermöglichen die zylindrischen Anlagezapfen eine Hertzsche Pressung an den Kontaktpunkten der Hebel. Dies gewährleistet eine gleichmäßige Verteilung der Normalkräfte und minimiert punktuelle Belastungen, wodurch wird die Effizienz der Kraftübertragung erhöht und lokale Materialüberbeanspruchung vermieden werden. Die tangentiale Anlage der Kontaktflächen der Hebelenden an den Zapfen reduziert tribologische Effekte, wie Verschleiß oder Kriechen, und verlängert die Lebensdauer der Komponenten. Vorteilhaft können sich, bedingt durch die zylindrische Form der Anlagezapfen die Hebel während der Bewegung an variierende Kontaktwinkel anpassen. Dies ermöglicht eine automatische Justierung innerhalb der Kinematik und kompensiert Abweichungen durch Fertigungstoleranzen, thermische Ausdehnung oder Verschleiß.

Nach einem weiteren Aspekt der vorliegenden Erfindung ist eine eine Hebelkinematik zur Verfügung stellende Anordnung von Auslösehebel und Übersetzungshebeln, mit an den jeweiligen Hebelenden des Auslösehebels und der Übersetzungshebel vorgesehenen, an den jeweiligen, dem Auslösehebel oder den Übersetzungshebeln zugeordneten Kontaktelementen anliegenden und einen definierten Winkel relativ zu den jeweiligen Kontaktelementen aufweisenden ebenen Kontaktflächen vorgesehen, wobei die Übersetzungshebel relativ zu einer Längsachse der Entriegelungseinheit gesehen, spiegelsymmetrisch zueinander angeordnet sind und die Übersetzungshebel von der Aktorfeder beaufschlagbare Federkraftübertragungselemente und der Auslösehebel wenigstens ein mit einer Vorspannkraft der Übersetzungshebel beaufschlagbares Kraftübertragungselement aufweisen. Vorteilhaft kombiniert die Hebelkinematik in der erfindungsgemäßen Entriegelungsfreigabeeinheit präzise Kraftübertragung, symmetrische Stabilität und mechanische Robustheit. Die definierte Winkelauslegung der Kontaktflächen und die spiegelsymmetrische Anordnung der Übersetzungshebel gewährleisten eine zuverlässige und effiziente Funktionalität und hohe Funktionssicherheit der Einheit, selbst unter anspruchsvollen Umgebungsbedingungen.

Es ist eine Idee der vorliegenden Erfindung die Hebelkinematik dazu auszubilden, die Vorspannkraft der Aktorfeder durch die Übersetzung des Auslösehebels und der Übersetzungshebel bis zum Freigabeelement zu reduzieren, derart, dass ein irreversibler Freigabevorgang durch eine irreversibel durchführbare, kontrollierte plastische Verformung, ein Reißen oder Brechen des Freigabeelementes einleitbar ist, wobei das Freigabeelement durch die Formänderung dann nicht mehr in der Lage ist, in der ursprünglichen Position und Funktion zu verbleiben bzw. in diese zurückzukehren. Vorteilhaft gewährleistet die Reduktion der Vorspannkraft eine präzise Steuerung des Freigabevorgangs. Dadurch ist der Entriegelungsprozess zeitlich exakt kontrollierbar.

Nach einem weiteren Aspekt der vorliegenden Erfindung ist das Freigabeelement als Schmelzblech oder Schmelzdraht ausgebildet und weist eine durch einen definierten Stromfluss bis zu einer plastischen Verformung, einem Reißen oder Brechen gesteuert verringerbare Zugfestigkeit auf.

Unter einem Schmelzblech ist im Zusammenhang mit der vorliegenden Erfindung ein dünnes Metallblech, das aus einem Material mit definierten Verformungs- oder Schmelzeigenschaften besteht (z.B. Zinn, Kupferlegierungen oder Aluminium) zu verstehen. Es schmilzt oder verformt sich bei einer bestimmten Temperatur, die durch den fließenden Strom verursacht wird.

Unter einem Schmelzdraht ist im Zusammenhang mit der vorliegenden Erfindung ein dünner Draht aus einem Metall oder einer Legierung mit gezielt eingestelltem Verformungs- oder Schmelzpunkt zu verstehen. Er funktioniert nach dem gleichen Prinzip wie das Schmelzblech: Bei Bestromung erhitzt sich der Draht durch den Joule-Effekt (Wärmeentwicklung durch elektrischen Strom) und schmilzt oder verformt sich ab einer bestimmten Stromstärke.

Vorteilhaft wird hierdurch die präzise Steuerbarkeit des Auslöseprozesses verbessert, da der Zeitpunkt der plastischen Verformung, des Reißens oder Brechens exakt definiert werden kann. Der kontrollierte Stromfluss minimiert dabei die Gefahr von Fehlauslösungen, da sich das Schmelzblech oder der Schmelzdraht nur bei einem exakt festgelegten Strom plastisch verformt, reißt oder bricht. Dies stellt sicher, dass äußere Einflüsse wie Temperaturveränderungen oder mechanische Belastungen die Funktion nicht beeinträchtigen. Vorteilhaft ermöglicht die Ausführungsform eine Anpassung an unterschiedliche Einsatzbedingungen, beispielsweise an verschiedene Temperaturbereiche oder mechanische Vorspannungen durch geeignete Auswahl der Materialzusammensetzung oder Materialeigenschaften des Schmelzbleches oder Schmelzdrahtes.

Nach einem weiteren Aspekt der vorliegenden Erfindung weist die Auslöseeinheit eine mit dem Freigabeelement verbundene elektrische Kontaktdurchführung auf. Die elektrische Kontaktdurchführung gewährleistet vorteilhaft eine zuverlässige Stromzufuhr zum insbesondere als Schmelzblech oder Schmelzdraht ausgebildeten Freigabeelement und damit die exakte Steuerung des Auslöseprozesses. Der definierte Stromfluss zur Reduktion der Zugfestigkeit des Freigabeelementes wird durch die Kontaktdurchführung zudem präzise und verlustarm übertragen. Die Kontaktdurchführung bietet eine mechanisch stabile Verbindung zwischen dem Freigabeelement Schmelzblech und der elektrischen Zuleitung. Dadurch wird sichergestellt, dass der Stromkreis auch unter äußeren Einflüssen wie Vibrationen, Schocks oder thermischen Belastungen intakt bleibt. Die elektrische Kontaktdurchführung ist vorteilhaft so ausgelegt, dass sie elektromagnetische Störungen (EMV) minimiert. Dies schützt die Steuerung vor äußeren Einflüssen und gewährleistet eine stabile Funktionalität der Auslöseeinheit auch in sicherheitskritischen Anwendungen.

Nach einem weiteren Aspekt der vorliegenden Erfindung ist das Anschlagelement ausgebildet, einen Hub des Entriegelungselements in einem ausgelösten Zustand der Entriegelungseinheit durch Positionierung des Anschlagelementes an einer im Aktorgehäuse vorgesehenen Anlage- oder Begrenzungsfläche zu begrenzen. Vorteilhaft stell dies sicher, dass das Entriegelungselement ausschließlich in dem vorgesehenen Bereich bewegt und Überhub verhindert wird. Die Fixierung in einer stabilen Endposition verhindert zudem ein Rückprellen oder eine unkontrollierte Bewegungen des Entriegelungselements und reduziert die Gefahr einer Wiederverriegelung.

Nach einem weiteren Aspekt der vorliegenden Erfindung ist ein Sensor zur Erfassung des Verriegelungs- oder Freigabestatus des Entriegelungselementes vorgesehen, wobei der Sensor insbesondere als Lichtschranke ausgebildet ist. Die Integration eines Sensors ermöglicht vorteilhaft eine eindeutige Erfassung des Betriebszustands des Entriegelungselements. Dadurch kann jederzeit festgestellt werden, ob sich das Element in der Verriegelungs- oder Freigabeposition befindet. Die präzise Überwachung erhöht die Transparenz des Systemstatus und erlaubt schnelle Diagnosen, falls Unregelmäßigkeiten auftreten. Die kontinuierliche Statusüberwachung durch den Sensor verhindert, dass ein unerkannter Fehlzustand, wie eine unvollständige Entriegelung oder Wiederverriegelung, zu kritischen Situationen führt und erhöht vorteilhaft die Betriebssicherheit. Die Verwendung eines Sensors, insbesondere einer Lichtschranke, bietet schnelle Reaktionszeiten und ermöglicht eine Echtzeit-Rückmeldung an übergeordnete Steuerungssysteme.

Ein weiterer Aspekt der Erfindung liegt in der Bereitstellung eines Verfahren zur kontrollierten Freigabe eines mechanischen Verriegelungselementes mittels einer wie zuvor beschriebenen Entriegelungsfreigabeeinheit. Das Verfahren umfasst dabei erfindungsgemäß die Schritte: Vornehmen einer gezielten Verformung des in der Auslöseeinheit angeordneten Freigabeelementes zur Verringerung der Zugfestigkeit bis zur plastischen Verformung, zum Reißen oder Brechen, Aktivieren der Hebelkinematik, und Übertragen der Vorspannkraft der wenigstens einen Aktorfeder über die Übersetzungshebel an den Auslösehebel über die Kraftübertragungsstellen, Führen der Übersetzungshebel und des Auslösehebels durch die Kontaktelemente, Anheben des wenigstens einen Anschlagelementes und des wenigstens einen Entriegelungselements bis zur Positionierung des wenigstens einen Anschlagelementes an der im Aktorgehäuse vorgesehenen Anlagefläche, und Fixieren der Hebelenden des Auslösehebels und der Übersetzungshebel in der Auslöseeinheit mittels einer Restvorspannkraft der Aktorfeder. Vorteilhaft wird hierdurch eine präzise Steuerung des Entriegelungsvorgangs ermöglicht. Die gezielte Verformung des wenigstens einen Freigabeelementes Schmelzblechs zur Verringerung der Zugfestigkeit bis zur plastischen Verformung, zum Reißen oder Brechen ermöglicht eine genaue und zeitlich steuerbare Auslösung des Entriegelungsvorgangs. Das Verfahren nutzt vorteilhaft die Hebelkinematik, um die Vorspannkraft der Aktorfeder effizient über die Übersetzungshebel und den Auslösehebel zu übertragen. Dadurch wird sichergestellt, dass die notwendige Kraft präzise und verlustarm auf das Entriegelungselement wirkt. Das Führen der Übersetzungshebel und des Auslösehebels durch die Kontaktelemente stellt eine exakte Führung und Stabilität der Bewegung sicher und verhindert unkontrollierte oder fehlerhafte Bewegungen während des Entriegelungsvorgangs. Die abschließende Fixierung der Hebelenden in der Auslöseeinheit mittels der Restvorspannkraft der Aktorfeder gewährleistet vorteilhaft, dass alle mechanischen Komponenten nach dem Entriegelungsvorgang stabil in ihrer Endposition verbleiben und Rückprellen oder Wiederverriegelung ausgeschlossen wird.

Gemäß einer Weiterbildung des Verfahrens wird durch die an den Kontaktelementen anliegenden und einen definierten Winkel relativ zu den jeweiligen Kontaktelementen aufweisenden, ebenen Kontaktflächen der Hebel die kinematisch wirksame Hebelübersetzung während der Freigabe kontinuierlich reduziert. Die kontinuierliche Reduktion der kinematisch wirksamen Hebelübersetzung bewirkt vorteilhaft, dass die Vorspannkraft der Aktorfeder gleichmäßig und effektiv über die Hebel auf das Verriegelungselement übertragen wird, minimiert somit Lastspitzen und gewährleistet eine kontrollierte Kraftübertragung. Als weiterer Vorteil ist anzusehen, dass die schrittweise Reduzierung der Hebelübersetzung während der Freigabe eine unkontrollierte Bewegungen oder ein Verklemmen der Mechanik verhindert und die Zuverlässigkeit des Entriegelungsvorgangs auch unter anspruchsvollen Bedingungen wie Vibrationen, Temperaturwechseln oder Verschmutzung erhöht.

Gemäß einer Weiterbildung umfasst das Verfahren ferner den Schritt: Überwachen der Freigabe und Positionsänderung des Verriegelungselements durch wenigstens einen in der Entriegelungsfreigabeeinheit angeordneten Sensor, insbesondere mittels wenigstens einer Lichtschranke. Die Überwachung des Entriegelungsvorgangs ermöglicht vorteilhaft eine eindeutige Bestimmung des Verriegelungs- und Freigabestatus des Verriegelungselements. Dadurch wird sichergestellt, dass der Entriegelungsvorgang vollständig und korrekt abläuft und ein Integration der Überwachung in ein übergeordnetes Steuer- und Überwachungssystem ermöglicht.

Gemäß einer Weiterbildung des Verfahrens ist das in der Auslöseeinheit angeordnete Freigabeelement als Schmelzblech oder Schmelzdraht mit einer durch einen definierten Stromfluss bis zu einer plastischen Verformung, einem Reißen oder Brechen gesteuert verringerbaren Zugfestigkeit ausgebildet und im Schritt des Vornehmens einer gezielten Verformung eine Bestromung des in der Auslöseeinheit angeordneten Schmelzbleches oder des Schmelzdrahtes vorgesehen, wobei eine Höhe und Dauer der Bestromung entsprechend der Materialeigenschaften des Schmelzblechs oder Schmelzdrahtes anpassbar ist. Vorteilhaft wird hierdurch ermöglicht, die Zugfestigkeit des Schmelzbleches oder Schmelzdrahtes präzise und reproduzierbar zu reduzieren und eine kontrollierte Auslösung des Freigabevorgangs durch irreversible Verformung oder Zerstörung des Freigabeelementes vorzunehmen.

Ein weiterer Aspekt der Erfindung liegt in der Bereitstellung eines Flugkörperstellsystem aufweisend eine Auslösemechanik mit wenigstens einer wie zuvor beschriebenen Entriegelungsfreigabeeinheit. Vorteilhaft stellt die Entriegelungsfreigabeeinheit sicher, dass das Flugkörperstellsystem auch in kritischen Phasen wie Start, Transport oder Flug unter extremen Bedingungen zuverlässig arbeitet. Durch die präzise Verriegelung und kontrollierte Freigabe wird das Risiko von Fehlfunktionen reduziert.

Ein weiterer Aspekt der Erfindung liegt in der Verwendung wenigstens einer wie zuvor beschriebenen Entriegelungsfreigabeeinheit in einer Auslösemechanik für irreversible Entriegelungsvorgänge. Die Verwendung der Entriegelungsfreigabeeinheit in einer Auslösemechanik für irreversible Entriegelungsvorgänge verbindet vorteilhaft präzise Steuerbarkeit, Robustheit und Funktionssicherheit. Sie gewährleistet eine zuverlässige und kontrollierte Freigabe auch unter widrigen Bedingungen und minimiert das Risiko unerwünschter Ereignisse bei irreversiblen Prozessen.

### KURZBESCHREIBUNG DER ZEICHNUNGEN

Im Folgenden wird die Erfindung unter Bezugnahme auf die Figur der Zeichnung erläutert. Es zeigt:
- Fig. 1a, b: eine schematische Darstellungen einer Entriegelungsfreigabeeinheit der vorliegenden Erfindung in Schnittdarstellung; und
- Fig. 2a, b: schematische Darstellungen der Hebelkinematik in einer Entriegelungsfreigabeeinheit der vorliegenden Erfindung.

### AUSFÜHRLICHE BESCHREIBUNG EINES AUSFÜHRUNGSBEISPIELS DER ERFINDUNG

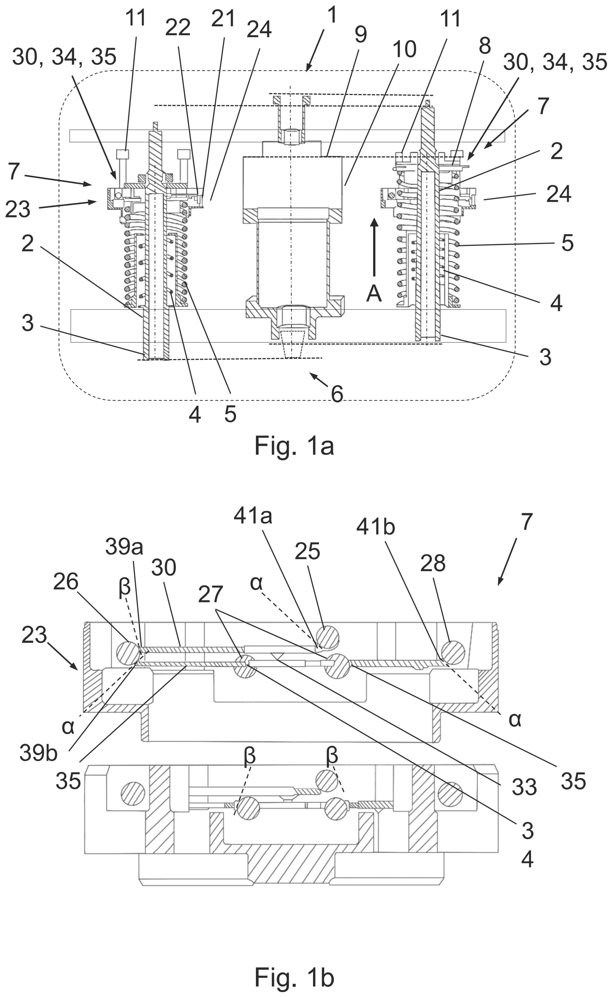

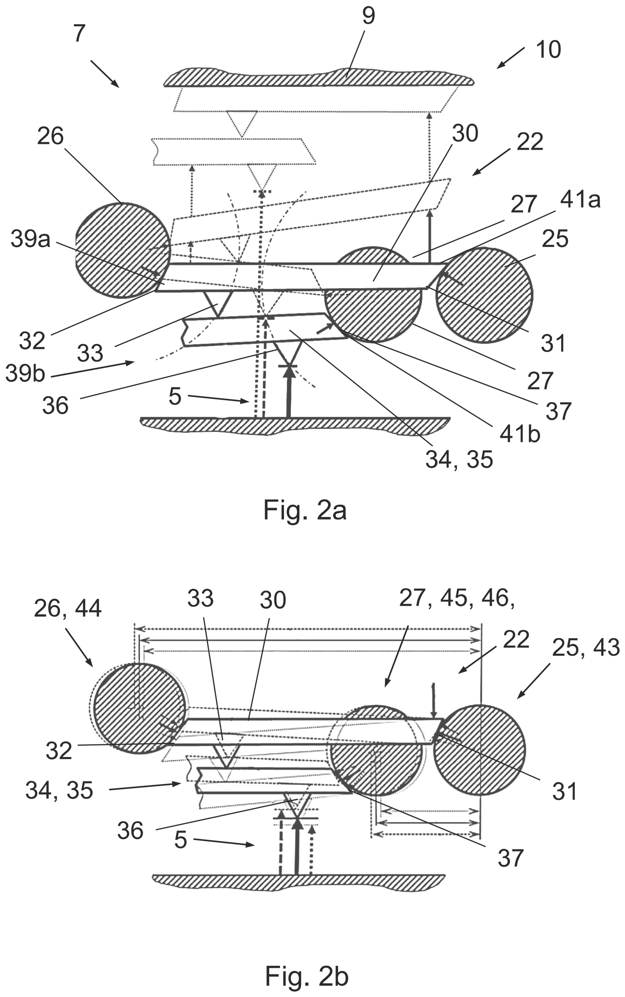

Fig. 1a und 1b zeigen schematische Darstellungen einer Entriegelungsfreigabeeinheit 1 gemäß der Erfindung mit den wesentlichen Komponenten in ihrer jeweiligen Funktionsanordnung. Die toleranzausgleichende Entriegelungsfreigabeeinheit 1, die im montierten Zustand im in Fig. 1a zentral dargestellten Aktorgehäuse 10 aufgenommen ist, umfasst ein im Aktorgehäuse 10 in axialer Richtung A, bewegliches Entriegelungselement 2, das an seinem in Fig. 1a unteren Ende 20 einen konischen Verriegelungszapfen 3 aufweist. Im Aktorgehäuse 10 ebenfalls aufgenommen sind eine Toleranzausgleichsfeder 4 und eine Aktorfeder 5, jeweils mit unterschiedlicher Dimensionierung und unterschiedlich starker Federvorspannung. Die Toleranzausgleichsfeder 4 gewährleistet im verriegelten Zustand (in Fig. 1a linke Darstellung) die ausreichende Vorspannung und Spielfreiheit des konischen Verriegelungszapfens 3 innerhalb der Kontaktzone der Verriegelungsstelle 6, wobei die Aktorfeder 5 die nötige Vorspannkraft in Verbindung mit dem erforderlichen Energieinhalt zur Betätigung des Entriegelungsvorganges bereitstellt. Der Entriegelungsvorgang wird über eine ebenfalls im Aktorgehäuse 10 aufgenommene Auslöseeinheit 7 initiiert, die auch in Fig. 1b dargestellt wird. Die wirksame Hebelkinematik ist in den Fig. 2a und 2b schematisch gezeigt.

Bei Auslösen des Entriegelungsvorganges wird ein Großteil der gespeicherten Federenergie der Aktorfeder 5 freisetzt, und das Entriegelungselement 2 im Aktorgehäuse 10 verschoben, bis das mit dem Entriegelungselement 2 verbundene Anschlagelement 8 an der das Aktorgehäuse 10 begrenzende Anlagefläche 9 anliegt und der Hub dadurch begrenzt wird (in Fig. 1a rechte Darstellung). Durch den Hub des Entriegelungselementes 2 werden ebenfalls die freigesetzten Hebelkomponenten, d.h. der Auslösehebel 30 und die beiden Übersetzungshebel 34, 35 (vgl. Fig 2a, b) in der Auslöseeinheit 7 verschoben, wobei sie mit der Restvorspannkraft der Aktorfeder 5 zwischen dem Anschlagelement 8 am oberen Ende des Verriegelungselementes 2 und der gehäuseseitigen Anlagefläche 9 innerhalb des Aktorgehäuses 10 mit hinreichender Restvorspannung der Aktorfeder 5 bis zum Missionsende geklemmt gehalten werden. Zur Führung des Anschlagselementes 8 sind im Aktorgehäuse lagefest angebrachte Bolzen 11 vorgesehen. Diese Vorspannkraft ist entsprechend allen Schock- und Vibrationsanforderungen an das Entriegelungselement 2 ausgelegt, wobei eine Kontur des Aktorgehäuses 10 eine formschlüssige Begrenzung zur Verhinderung eines seitlichen Herausrutschens der Hebel 30, 34, 35 aufweist. Kontrolliert steuerbar wird die Auslösung des Entriegelungsvorganges durch die auch die Hebelkinematik gewährleistende Auslöseeinheit 7. In der Auslöseeinheit 7 ist ein an einem Elementhalter 21 fest angebundenes im Ausführungsbeispiel als Schmelzblech ausgebildetes Freigabeelement 22 vorgesehen, das infolge Eigenerwärmung bei festgelegtem Stromdurchfluss seine Zugfestigkeit in definiertem Maße verringert. In einer der Auslöseeinheit 7 zugeordneten, lagefest im Aktorgehäuse 10 angeordneten Strukturkomponente 23 sind der Elementhalter 21 mit Freigabeelement 22, d. h. im Ausführungsbeispiel ein Schmelzblechhalter mit einem Schmelzblech, und dessen gegenüber der Strukturkomponente 23 isolierte Kontaktdurchführung 24 aufgenommen. Des Weiteren stellt die Auslöseeinheit 7 die gemäß kinematischer Auslegung jeweils erforderliche Geometrie der dort vorgesehenen Kontaktelemente 25, 26, 27, 28 für die über die Hebel 30, 34, 35 realisierte Hebelkinematik zur Verfügung. Fig. 1b zeigt die Auslöseeinheit 7 mit den dort angeordneten Hebeln 30, 34, 35 und Kontaktelementen 25, 26, 27, 28.

Fig. 2a und 2b zeigen schematisch die jeweilige Hebelkinematik in der Auslöseeinheit 7 der Entriegelungsfreigabeeinheit 1. Eine erste Hebelübersetzung, dessen Auslösehebel 30 an jedem Hebelende 39a, b, 41a, b ebene Kontaktflächen 31, 32 aufweist, die mit definierten Kontaktwinkeln α, β an den Kontaktelementen 25, 26 der Strukturkomponente 23 anliegen, wird über im Ausführungsbeispiel nockenförmig erhabene Kraftübertragungselemente 33 im Bereich des hinteren Hebelendes 41a von der Anlagekraft des nachgeschalteten Paares an Übersetzungshebeln 34, 35 beaufschlagt und an dem vorderen Hebelende 39a durch das auch hier als Schmelzblech ausgebildete Freigabeelement 22 in Position gehalten. Die zweite Hebelübersetzung weist zwei spiegelsymmetrisch angeordnete Übersetzungshebel 34, 35 auf, die parallel geschaltet über den jeweiligen Übersetzungshebeln 34, 35 zugeordnete Federkraftübertragungselemente 36 direkt von der Vorspannkraft der Aktorfeder 5 beaufschlagt werden, und ihrerseits ebenfalls beide mit unter den Kontaktwinkeln α, β geneigten, ebenen Kontaktflächen 37, 38 an beiden Hebelenden 39b, 41b gegen je zwei Kontaktelemente 27, 28 der Strukturkomponente 23 gepresst werden und sich dabei an nockenförmig erhabenen Kraftübertragungselementen 33 des Auslösehebels 30 abstützen. Im in Fig. 2a gezeigten unausgelöst vorgespannten Zustand, d. h. durch das Freigabeelement 22 gehalten, wird somit eine kinematische Kette mit zweistufiger Hebelübersetzung, entsprechend den kinematischen Abmessungen in Einbaulage der Hebel 30, 34, 35 wirksam, die die Vorspannkraft der Aktorfeder 5 bis zum Freigabeelement 22 herabsetzt. Die Kraftübertragungselemente 33 des Auslösehebels und die Federkraftübertragungselemente 36 der Übersetzungshebel 34, 35 sind gegenüber der Hebeloberfläche an definierter Position mit definiertem Maß erhaben ausgeführt, um einerseits das kinematische Prinzip gemäß Fig. 2a zu realisieren und zugleich die erforderliche Kollisionsfreiheit zu Beginn der Auslösebewegung herzustellen. Nach erfolgter Auslösung infolge kontrollierten Reißens des Freigabeelementes 22, im Ausführungsbeispiel durch bestromen des Schmelzbleches, unter bestehender Vorspannkraft der Aktorfeder 5 gleiten die ebenen Kontaktflächen 31, 32, 37, 38 entsprechend ihren Kontaktwinkeln α, β an den Enden 39a, b, 41a, b der jeweiligen Hebel 30, 34, 35 an den diesen jeweils zugeordneten Kontaktelementen 25, 26, 27, 28 ab, wodurch sich die kinematisch wirksame Hebelübersetzung umgehend reduziert, bis die Hebel 30, 34, 35 von den jeweils zugeordneten Kontaktelementen 25, 26, 27, 28 freigesetzt sind und vom Anschlagelement 8 am in Fig. 2b oberen Ende des Entriegelungselementes 2 nahezu parallel gestapelt in den in den oberen Bereich der Auslöseeinheit 7 transportiert werden, wo sie mit der Restvorspannkraft der Aktorfeder 5 am oberen Ende des Verriegelungselementes 2 und der im Aktorgehäuse 10 vorgesehenen Anlagefläche 9 mit entsprechend allen Schock- und Vibrationsanforderungen hinreichender Vorspannung bis zum Missionsende geklemmt gehalten werden. Eine Rückmeldung sowohl der verriegelten als auch der entriegelten Position des Entriegelungselementes 2 kann beispielsweise über entsprechend angeordnete Sensoren oder Lichtschranken (nicht dargestellt) erfolgen. In einer Ausführungsform der Auslöseeinheit 7 können zur Robustifizierung gegenüber besonders harschen Umgebungsbedingungen innerhalb sehr großer Lager- und Einsatztemperaturbereiche die in der Strukturkomponente 23 vorgesehenen Kontaktelemente 25, 26, 27, 28 zylindrische Oberflächen 40 zumindest im jeweiligen Abschnitt der Anlagesektoren aufweisen, an denen die jeweiligen, definiert unter den Kontaktwinkeln α, β abgeschrägten Kontaktflächen 31, 32, 37, 38 aller Hebel 30, 34, 35 jeweils an den Hebelenden 39a, b, 41a, b tangential mit Hertzscher Pressung anliegen, woraus erfindungsgemäß eine entsprechend veränderte kinematische Funktion der Auslösemechanik, wie beispielhaft in Fig. 2b gezeigt, resultiert. Dabei weisen die Kontaktflächen 31, 32, 37, 38 der Hebelenden 39a, b, 41a, b auslegungstechnisch optimiert unterschiedliche Abschrägungen auf, die entsprechend ihren toleranzbedingt resultierenden Einbaulagen die jeweiligen Tangentenwinkel an den gehäuseseitig als zylindrische Anlagezapfen 43, 44 ,45, 46 ausgebildeten Kontaktelementen bilden. Entsprechend der sich daraus ergebenden Evolvenzfunktion der ebenen Anlage - bzw. Kontaktflächen 31, 32, 37, 38 gegenüber den zylindrischen Anlagezapfen 43, 44, 45, 46 bei Abstandsänderung durch thermische Längenausdehnungsdifferenzen zwischen Hebellängen und Gehäusepunktabständen 41, 42 stellen die Durchmesser der spiegelbildlich paarweise angeordneten Anlagezapfen 43, 44, 45, 46 in Verbindung mit der Länge und den Abschrägungswinkeln der Hebel 30, 34, 35 die daraufhin zu optimierenden kinematischen Auslegungsparameter dar. Je nach Einbautoleranz und Zapfenabstand entsprechend thermischer Ausdehnung ändern sich im unausgelöst vorgespannten Zustand zwangsläufig die Einbaulagen aller Hebel 30, 34, 35 zueinander infolge der unterschiedlichen Abschrägungen ihrer Anlage - bzw. Kontaktflächen 31, 32, 37, 38, wobei sich mit den sich gleichzeitig verändernden Tangentenwinkeln auch die kinematischen Verhältnisse ändern. Gegenüber der jeweils anteilig eingeprägten Vorspannkraft des Aktorfeder 5 verändern sich somit auch proportional die Anlagekräfte (Normalkräfte) und Reibkräfte (Tangentialkräfte) an jeder Anlage- bzw. Kontaktflächen 31, 32, 37, 38. Im erfindungsgemäß angestrebten Idealfall, werden temperaturbedingt verursachte Vorspannungsänderungen der Federkraft der Aktorfeder 5 gegenüber dem Elementhalter 21 vollständig kompensierbar, so dass es dadurch zu keinerlei Bewegung und somit Änderung der Vorspannkraft am empfindlichen Freigabeelement 22 kommt. Dies verhindert eine Zerstörung des Freigabeelementes 22, vorliegend beispielsweise ein Reißen des Schmelzbleches mit Folge einer ungewollten Entriegelung. Gleichzeitig reduziert dieses kinematische Konzept die resultierende Krafthysterese innerhalb der Hebelmechanik durch den verbesserten Wirkungsgrad der Rückwärtskinematik, was zugleich die Gefahr von lokalen Überlastungen an den Anlage - bzw. Kontaktflächen 31, 32, 37, 38 zwischen Hebeln 30, 34, 35 und Aktorgehäuse 10 und auf diese Weise auch die Gefahr eines Verklemmens der Hebelmechanik reduziert. Die Auswirkungen auf die Vorspannkraft des Freigabeelementes 22 infolge der diesbezüglich bewusst größer in Kauf genommenen Ausgleichwege werden durch das kinematische Prinzip erfindungsgemäß an dessen Angriffsstelle vollständig neutralisiert.

Obwohl die vorliegende Erfindung anhand des bevorzugten Ausführungsbeispiels vorstehend vollständig beschrieben wurde, ist sie darauf nicht beschränkt, sondern auf vielfältige Art und Weise modifizierbar.

Ergänzend sei darauf hingewiesen, dass "aufweisend" oder "umfassend" keine anderen Elemente oder Schritte ausschließt und dass "eine" oder "ein" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### BEZUGSZEICHENLISTE

- 1: Entriegelungsfreigabeeinheit
- 2: Entriegelungselement
- 3: Verriegelungszapfen
- 4: Toleranzausgleichsfeder
- 5: Aktorfeder
- 6: Verriegelungsstelle
- 7: Auslöseeinheit
- 8: Anschlagelement
- 9: Anlagefläche
- 10: Aktorgehäuse
- 11: Bolzen
- 20: unteres Ende
- 21: Elementhalter
- 22: Freigabeelement
- 23: Strukturkomponente
- 24: Kontaktdurchführung
- 25: Kontaktelement
- 26: Kontaktelement
- 27: Kontaktelement
- 28: Kontaktelement
- 30: Auslösehebel
- 31: Kontaktfläche
- 32: Kontaktfläche
- 33: Kraftübertragungselement
- 34: Übersetzungshebel
- 35: Übersetzungshebel
- 36: Federkraftübertragungselement
- 37: Kontaktfläche
- 38: Kontaktfläche
- 39a, b: vorderes Hebelende
- 40: Oberfläche
- 41a, b: hinteres Hebelende
- 41: Gehäusepunktabstand
- 42: Gehäusepunktabstand
- 43: Anlagezapfen
- 44: Anlagezapfen
- 45: Anlagezapfen
- 46: Anlagezapfen
- α, β: Kontaktwinkel
- A: Pfeil

## Patentansprüche

1. Entriegelungsfreigabeeinheit (1) zur kontrollierten Freigabe einer mechanischen Verriegelung, aufweisend:
- ein Aktorgehäuse (10);
- wenigstens ein sich durch das Aktorgehäuse (10) erstreckendes und in axialer Richtung im Aktorgehäuse (10) verschiebbar angeordnetes Entriegelungselement (2);
- wenigstens eine im Aktorgehäuse (10) angeordnete Auslöseeinheit (7);
- wenigstens eine sich im Aktorgehäuse (10) einerseits und an dem Entriegelungselement (2) andererseits abstützende Toleranzausgleichsfeder (4);
- wenigstens eine sich im Aktorgehäuse (10) einerseits und der wenigstens einen Auslöseeinheit (7) andererseits abstützende Aktorfeder (5), und
- eine im Aktorgehäuse (10) vorgesehene Anlagefläche (9),
wobei die wenigstens eine Auslöseeinheit (7) umfasst:
- einen Auslösehebel (30) und jeweils mit dem Auslösehebel (30) in Wirkverbindung stehend, einen ersten und einen zweiten Übersetzungshebel (34, 35);
- wenigstens eine im Aktorgehäuse (10) festgelegte, einen ein plastisch verformbares, reiß- oder brechbares Freigabeelement (22) aufweisenden Elementhalter (21) und eine Führungskulisse für den Auslösehebel (30), den ersten Übersetzungshebel (35) und den zweiten Übersetzungshebel (34) zur Verfügung stellende Strukturkomponente (23); und
- wenigstens ein mit dem wenigstens einen Verriegelungselement (2) verbundenes Anschlagelement (8).

2. Entriegelungsfreigabeeinheit (1) nach Anspruch 1, **dadurch gekennzeichnet, dass** die Führungskulisse an einer inneren Umfangswand der Strukturkomponente (23) Kontaktelemente (25, 26, 27, 28) zur Kontaktierung und Führung von an Hebelenden (39a, b, 41a, b) des Auslösehebels (30), des ersten Übersetzungshebels (35) und des zweiten Übersetzungshebels (34) vorgesehenen Kontaktflächen (31, 32, 37, 38) aufweist.

3. Entriegelungsfreigabeeinheit (1) nach Anspruch 1 oder 2, **dadurch gekennzeichnet, dass** die Kontaktelemente (25, 26, 27, 28) als tangential vorspringende, insbesondere zylindrisch ausgeformte, Anlagezapfen (43, 44, 45, 46) ausgebildet sind.

4. Entriegelungsfreigabeeinheit (1) nach einem der vorhergehenden Ansprüche, **gekennzeichnet durch** eine eine Hebelkinematik zur Verfügung stellende Anordnung von Auslösehebel (30) und Übersetzungshebeln (34, 35), mit an den jeweiligen Hebelenden (39a, b, 41a, b) des Auslösehebels (30) und der Übersetzungshebel (34, 35) vorgesehenen, an den jeweiligen dem Auslösehebel (30) oder den Übersetzungshebeln (34, 35) zugeordneten Kontaktelementen (25, 26, 27, 28) anliegenden und einen definierten Winkel (α, β) relativ zu den jeweiligen Kontaktelementen (25, 26, 27, 28) aufweisenden ebenen Kontaktflächen (31, 32, 37, 38), wobei die Übersetzungshebel (34, 35) relativ zu einer Längsachse der Entriegelungsfreigabeeinheit (1) gesehen, spiegelsymmetrisch zueinander angeordnet sind und die Übersetzungshebel (34, 35) von der Aktorfeder (5) beaufschlagbare Federkraftübertragungselemente (36) und der Auslösehebel (30) wenigstens ein mit einer Vorspannkraft der Übersetzungshebel (34, 35) beaufschlagbares Kraftübertragungselement (33) aufweist.

5. Entriegelungsfreigabeeinheit (1) nach Anspruch 4, **dadurch gekennzeichnet, dass** die Hebelkinematik ausgebildet ist, die Vorspannkraft der Aktorfeder (5) durch die Übersetzung des Auslösehebels (30) und der Übersetzungshebel (34, 35) bis zum Freigabeelement (22) zu reduzieren derart, dass ein Freigabevorgang durch eine plastische Verformung, ein Reißen oder Brechen des Freigabeelementes (22) einleitbar ist.

6. Entriegelungsfreigabeeinheit (1) nach einem der vorhergehenden Ansprüche, **dadurch gekennzeichnet, dass** das Freigabeelement (22) als Schmelzblech oder Schmelzdraht ausgebildet ist und eine durch einen definierten Stromfluss bis zu einer plastischen Verformung, einem Reißen oder Brechen gesteuert verringerbare Zugfestigkeit aufweist.

7. Entriegelungsfreigabeeinheit (1) nach einem der vorhergehenden Ansprüche, **dadurch gekennzeichnet, dass** die Auslöseeinheit (7) eine mit dem Freigabeelement (22) verbundene, elektrische Kontaktdurchführung (24) aufweist.

8. Entriegelungsfreigabeeinheit (1) nach einem der vorhergehenden Ansprüche, **dadurch gekennzeichnet, dass** das Anschlagelement (8), ausgebildet ist, einen Hub des Entriegelungselements (2) in einem ausgelösten Zustand der Entriegelungsfreigabeeinheit (1) durch Positionierung des Anschlagelementes (8) an der Anlagefläche (9) zu begrenzen.

9. Entriegelungsfreigabeeinheit (1) nach einem der vorhergehenden Ansprüche, **dadurch gekennzeichnet, dass** ein Sensor zur Erfassung des Verriegelungs- oder Freigabestatus des Entriegelungselementes (2) vorgesehen ist, wobei der Sensor insbesondere als Lichtschranke ausgebildet ist.

10. Verfahren zur kontrollierten Freigabe eines mechanischen Verriegelungselementes (2) mittels einer Entriegelungsfreigabeeinheit (1) nach einem der Ansprüche 1 bis 9, umfassend die Schritte:
- Vornehmen einer gezielten Verformung des in der Auslöseeinheit (7) angeordneten wenigstens einen Freigabeelementes (22) zur Verringerung der Zugfestigkeit bis zur plastischen Verformung, zum Reißen oder Brechen;
- Aktivieren der Hebelkinematik, und Übertragen der Vorspannkraft der wenigstens einen Aktorfeder (5) über die Übersetzungshebel (34, 35), an den Auslösehebel (30) über die Federkraftübertragungselemente (36);
- Führen der Übersetzungshebel (34, 35) und des Auslösehebels (30) durch die Kontaktelemente (25, 26, 27, 28);
- Anheben des wenigstens einen Anschlagelementes (8) und des wenigstens einen Entriegelungselementes (2) bis zur Positionierung des wenigstens einen Anschlagelementes (8) an der im Aktorgehäuse (10) vorgesehenen Anlagefläche (9); und
- Fixieren der Hebelenden (39a, b, 41a, b) des Auslösehebels (30) und der Übersetzungshebel (34, 35) in der Auslöseeinheit (7) mittels einer Restvorspannkraft der Aktorfeder (5).

11. Verfahren nach Anspruch 10, **dadurch gekennzeichnet, dass** durch die an den Kontaktelementen (25, 26, 27, 28) anliegenden und einen definierten Winkel (α, β) relativ zu den jeweiligen Kontaktelementen (25, 26, 27, 28) aufweisenden ebenen Kontaktflächen (31, 32, 37, 38) der Hebel (30, 34, 35) die kinematisch wirksame Hebelübersetzung während der Freigabe kontinuierlich reduziert wird.

12. Verfahren nach Anspruch 10 oder 11, ferner umfassend den Schritt:
- Überwachen der Freigabe und Positionsänderung des Entriegelungselements (2) durch wenigstens einen in der Entriegelungsfreigabeeinheit (1) angeordneten Sensor, insbesondere mittels wenigstens einer Lichtschranke.

13. Verfahren nach einem der Ansprüche 10 bis 12, **dadurch gekennzeichnet, dass** das in der Auslöseeinheit (7) angeordnete Freigabeelement (22) als Schmelzblech oder Schmelzdraht mit einer durch einen definierten Stromfluss bis zu einer plastischen Verformung, einem Reißen oder Brechen gesteuert verringerbaren Zugfestigkeit ausgebildet ist und im Schritt des Vornehmen einer gezielten Verformung eine Bestromung des Schmelzbleches oder des Schmelzdrahtes vorgesehen ist, wobei eine Höhe und Dauer der Bestromung entsprechend der Materialeigenschaften des Schmelzbleches oder des Schmelzdrahtes anpassbar ist.

14. Flugkörperstellsystem aufweisend eine Auslösemechanik mit wenigstens einer Entriegelungsfreigabeeinheit (1) nach einem der Ansprüche 1 bis 9.

15. Verwendung wenigstens einer Entriegelungsfreigabeeinheit (1) nach einem der Ansprüche 1 bis 9 in einer Auslösemechanik für irreversible Entriegelungsvorgänge.
